# EUROPEAN PATENT APPLICATION

(11) **EP 1 881 615 A1**
(43) Date of publication of application: **23.01.2008**
(21) Application number: 06741753.5
(22) Date of filing: 28.04.2006
(51) Int. Cl.: H04B 1/707

(54) **A DISTRIBUTION METHOD OF MULTI BASIC MIDAMBLE AND JOINT DETECTION METHOD**

(30) Priority: 13.05.2005 CN 200510069283
(71) Applicant: Shanghai Ultimate Power Communications Technology Co., Ltd., Shanghai 201700 (CN)
(72) Inventor: WANG, Ke, Qingpu District, Shanghai 201700 (CN); YANG, Guiliang, Qingpu District, Shanghai 201700 (CN); LI, Feng, Qingpu District, Shanghai 201700 (CN)
(74) Representative: Clegg, Richard Ian
(86) International application number: PCT/CN2006/000835
(87) International publication number: WO 2006/119688

(57) **Abstract**

A distribution method of multi basic midamble includes following step A. determining the number of channelizing code of a cell or sector (s101); B. configuring more than one of basic midamble to the cell or sector (s102); C. generating midamble which is no less than said channelizing code using said more than one of basic midamble (s103); D. configuring said midamble to make each channelizing code correspond to different midamble respectively (s104). The invention can configure multi basic midamble code in a cell or sector to make midamble correspond to all of adoptable spread spectrum code one-to-one, can improve the accuracy of joint detection remarkably and efficiently, and can change the service speed more securely. Furthermore, acquiring channelizing impulse response and corresponding spread spectrum code using the exact corresponding of midamble and spread spectrum code can acquire user original signal exactly. The invention also includes a joint detection method.

## Description

### Field of the Invention

The present invention relates generally to the field of wireless communications, and more particularly, to a method for allocating multiple midamble codes and a joint detection method thereof.

### Background of the Invention

The joint detection technique employed in a Time Division Synchronous Code Division Multiple Access (TD-SCDMA) system, on the basis of the conventional detection techniques, enables multi-user signal separation to be implemented as a unified and correlated joint detection by fully utilizing each of the user signals and the multipath priori information thereof that causes Multiple Address Interferences (MAIs), and thus has an excellent anti-interference performance having a reduced power control accuracy requirement of the system, such that the system capacity can be significantly increased by more efficiently utilizing spectrum resources on uplinks.

The purpose of the joint detection is to estimate an original signal sent by a user in accordance with spreading codes and channel impulse responses of all users, which thus constitute a prerequisite for a joint detection algorithm. In the TD-SCDMA system, training sequences "midambles (midamble codes)" for channel estimation are arranged in a frame structure. The channel impulse response can be estimated from a portion received signal of the training sequences and the known training sequences, and thus the spreading codes can be determined, enabling estimation of the original signal.

The midamble codes used in one cell are generated by cyclically shifting one basic midamble code. The system has a total number of 128 basic midamble codes, each having a length of 144 chips, which are evenly divided into 32 code groups, each group having 4 basic midamble codes. The basic midamble codes to be used are directly arranged by a network. After downlink synchronization has been established, a mobile terminal also gets to know the used group of basic midamble codes. In existing TD-SCDMA standards, a cell is allocated a basic midamble code, a downlink pilot, and a scrambling code with a one-to-one correspondence to the basic midamble code. A code group consists of four basic midamble codes, four scrambling codes, and one downlink pilot corresponding thereto. The downlink pilot, basic midamble code and scrambling code used in a particular cell or sector can be identified by the network through a cell parameter ID in a high-level message, which can be acquired by a base station or a terminal in such a manner that the base station and the terminal are notified by the network through an Iub interface message and an air interface high-level message, respectively.

The basic midamble code can generate midamble codes having various channel estimation windows in accordance with a certain generation rule. Three types of midamble code allocation schemes, i.e., specific, default and common schemes can be employed in a system for allocating the basic midamble code. In the specific scheme, each of the used midamble codes and each channelization code (also referred to as "spreading code") are notified through high-level signaling. In the default and common schemes, a correspondence between the midamble code and each channelization code is defined according to a predefined criterion. Each midamble code may be corresponding to one or more channelization codes, which may have the same or a different spreading factor.

The information on the basic midamble code and the scramble code used in the present cell, with a one-to-one correspondence therebetween, can be arranged and notified by the network by means of a specific message, such as CELL SETUP REQUEST message, a system broadcast message or SIB5, in which a cell Parameter ID is arranged.

Also, the used midamble code allocation scheme, i.e. specific scheme, default scheme or common scheme, can be notified to the terminal by the network through a high-level message. In the case of the specific scheme, the shift window of midamble codes used by the user is notified to the terminal by the network through a high-level message. In the case of the other two schemes, the physical layer of the terminal operates by using its corresponding midamble code through a predefined correspondence between a midamble code and a channelization code.

In current schemes, basic midamble codes are one-to-one corresponding to scramble codes, and a code group consisting of four basic midamble codes and four scrambling codescorresponds to one downlink pilot. The midamble codes used by the user are obtained by shifting a basic midamble code. There is a predefined correspondence or a correspondence specified by a high level between the midamble code and a channelization code used by the terminal. Multi-user detection is performed based on the above information, resulting in improved detection performance.

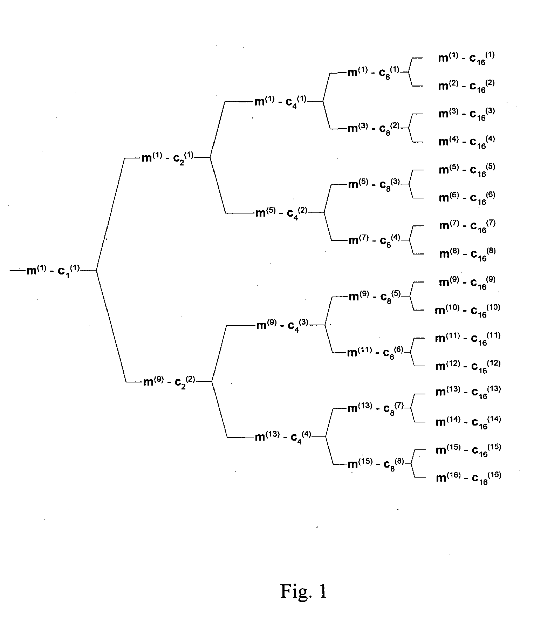

As an example, the network arranges cell parameters in such a manner that only one Cell Parameter ID is arranged in a message, such as CELL SETUP REQUEST message or SIB5. The Cell Parameter ID only represents a group of basic midamble codes and scramble codes with one-to-one correspondences therebetween. As such, once the system specifies a scramble code and its corresponding basic midmable code for a cell or sector, the number of available channel estimation windows in the cell or sector is less than that of available channelization codes. Figure 1 shows the correspondences between midamble codes and channelization codes in the case that K=16. The system has a total number of 31 channelization codes: *C₁*⁽¹⁾, *C₂*⁽¹⁾, *C₂*⁽²⁾, *C₄*⁽¹⁾, *C₄*⁽²⁾, *C₄*⁽³⁾, *C₄*⁽⁴⁾, *C₈*⁽¹⁾, C₈⁽²⁾, C₈⁽³⁾_{,} C₈⁽⁴⁾, *C₈*⁽⁵⁾, *C₈*⁽⁶⁾, *C₈*⁽⁷⁾, *C₈*⁽⁸⁾, *C₁₆*⁽¹⁾, *C₁₆*⁽²⁾, *C₁₆*⁽³⁾, *C₁₆*⁽⁴⁾, *C₁₆*⁽⁵⁾, *C₁₆*⁽⁶⁾, *C₁₆*⁽⁷⁾, *C₁₆*⁽⁸⁾, *C₁₆*⁽⁹⁾, *C₁₆*⁽¹⁰⁾, *C₁₆*⁽¹¹⁾, *C₁₆*⁽¹²⁾, *C₁₆*⁽¹³⁾, *C₁₆*⁽¹⁴⁾, *C₁₆*⁽¹⁵⁾, *C₁₆*⁽¹⁶⁾. However, in the case of K=16, the system has a total number of 16 channel estimation windows, and thus only 16 midamble codes can be defined by shifting a basic midamble code. As a result, full one-to-one correspondences cannot be established between midamble codes and channelization codes. For example, midamble code *m*⁽¹⁾ needs to be corresponding to channelization codes *C₁*⁽¹⁾, *C₂*⁽¹⁾, *C₄*⁽¹⁾, *C₈*⁽¹⁾, *C₁₆*⁽¹⁾. As a result, full one-to-one correspondences cannot be established between midamble codes and spreading codes.

When the terminal automatically changes its spreading factor, if the code channel allocated by the system is different from that for transmission, as is the case with a variable bit rate service, the fact that midamble codes cannot be exactly corresponding to spreading codes makes it difficult for a receiver to determine the correspondences between individual midamble code and spreading code, and thus it is difficult to obtain information on the code channel for transmission. Therefore, it is difficult to perform multi-user detection.

Furthermore, in the TD-SCDMA system, the joint detection is to estimate a channel impulse response from a portion received signal of the training sequences 1 and the known training sequences, and to estimate an original signal sent by a user in connection with spreading codes. As a result, the fact that the midamble codes cannot be exactly corresponding to the spreading codes makes it impossible to obtain an exact channel impulse response and its corresponding spreading code, and thus it is impossible to obtain an exact original signal.

### Summary of the Invention

The purpose of the present invention is to provide a method for allocating multiple midamble codes and a joint detection method thereof, by which one-to-one correspondences can be established between midamble codes and spreading codes in a cell, and accurate multi-user detection can be performed by a receiving end.

In view of the above, the present invention provides a method for allocating multiple midamble codes, including steps of:

A. determining the number of channelization codes in a cell or sector;

B. arranging a plurality of basic midamble codes for the cell or sector;

C. generating a plurality of midamble codes by using the plurality of basic midamble codes, the number of the plurality of midamble codes being not less than that of the channelization codes;

D. allocating the plurality of midamble codes, such that each of the channelization codes is corresponding to a different midamble code.

The step B may further includes the following steps of:

B11: configuring a Cell Parameter ID for multiple times, each time the Cell Parameter ID being configured with a basic midamble code and a scramble code;

B12: forming basic midamble codes and scramble codes with one-to-one correspondences therebetween for the cell or sector, each of the basic midamble codes being corresponding to a different scramble code.

In addition, the step B also may include the following steps of:

B21: configuring a Cell Parameter ID for multiple times, each time the Cell Parameter ID being configured with a basic midamble code and a scramble code;

B22: forming basic midamble codes and scramble codes with one-to-one correspondences therebetween for the cell or sector, each of the basic midamble codes being corresponding to the same scramble code.

Meanwhile, the step B may further include the following steps of:

B31: expanding a Cell Parameter ID;

B32: determining a basic midamble code and its corresponding scramble code on the basis of the expanded Cell Parameter ID;

B33: forming basic midamble codes and scramble codes with one-to-one correspondences therebetween for the cell or sector, each of the basic midamble codes being corresponding to a different scramble code.

Also, the step B may further include the following steps of:

B41: expanding a Cell Parameter ID;

B42: determining a basic midamble code and its corresponding scramble code on the basis of the expanded Cell Parameter ID;

B43: forming basic midamble codes and scramble codes with one-to-one correspondences therebetween for the cell or sector, each of the basic midamble codes being corresponding to the same scramble code.

The same scramble code corresponding to the basic midamble codes is determined by the priorities of a group of scramble codes for a cell or sector, which are set according to a predefined criterion.

The step B may further include a step of: by adding at least one group of basic midamble codes, establishing one-to-one correspondences between each basic midamble code of the at least one group of basic midamble codes and each basic midamble code of the existing group of basic midamble codes, and establishing one-to-one correspondences between each basic midamble code of the at least one group of basic midamble codes and each scramble code of the existing group of scramble codes, such that there are a plurality of basic midamble codes in each cell or sector.

The schemes for allocating in the step D include specific, default and common allocation schemes.

The plurality of midamble codes in the step C are generated by cyclically shifting the plurality of basic midamble codes.

The number of the channelization codes is determined by the maximum number of shift windows.

The channelization codes have the same or a different spreading factor.

The present invention further provides a joint detection method on the basis of the allocation of multiple basic midamble codes, including the following steps of:

a. in initial system configuration, determining the number of channelization codes in a cell or sector; arranging a plurality of basic midamble codes for the cell or sector; generating a plurality of midamble codes by using the plurality of basic midamble codes, the number of the plurality of midamble codes being not less than that of the channelization codes; allocating the plurality of midamble codes, such that each of the channelization codes is corresponding to a different midamble code;

b. determining a channel impulse response from the plurality of midamble codes;

c. determining an original signal from the channel impulse response and a received signal.

The present invention has the advantages over the prior art as detailed below.

According to the present invention, a plurality of basic midamble codes can be arranged for a cell or sector by, but not limited to, configuring a Cell Parameter ID for multiple times, expanding the Cell Parameter ID, or using a new parameter capable of arranging basic midamble codes. A plurality of basic midamble codes is permissible to allocate to one cell or sector. Basic midamble codes and scramble codes can be the same as or different from those used in the prior art, but enabling one-to-one correspondences to be established between the midamble codes and all available spreading codes. Further, in a cell or sector, it is possible not only for a basic midamble code to be corresponding to different scramble code as defined according to the prior art, but also possible for a plurality of basic midamble codes to be corresponding to a scramble code with a higher priority according to the priorities set in a group of scramble codes. In this way, by adding basic midamble codes, one-to-one correspondences are established between midamble codes, generated by the basic midamble codes, and spreading codes. It is thus possible to perform more accurate joint detection, and to implement more reliable variable bit rate services.

Further, the fact that the midamble codes can be exactly corresponding to the spreading codes makes it possible to obtain an exact channel impulse response and its corresponding spreading code, and thus to obtain an exact original signal.

### Brief Description of the Drawings

Figure 1 shows correspondences between midamble codes and channelization codes according to the prior art;

Figure 2 is a flowchart illustrating a method for allocating multiple basic midamble codes according to an embodiment of the present invention; and

Figure 3 is a flowchart illustrating a joint detection method on the basis of the allocation of the multiple basic midamble codes according to an embodiment of the present invention.

### Detailed Description of the Embodiments

Description will now be made in detail to the preferred embodiments of the invention with reference to the accompany drawings. Particular terminology used when describing certain features or aspects of the invention should not be taken to imply that the terminology is being redefined herein to be restricted to any specific characteristics, features, or aspects of the invention with which that terminology is associated. Therefore, the detailed description of the embodiments of the invention is not intended to be exhaustive or to limit the invention to the precise form as disclosed. Various equivalent modifications are possible within the scope of the invention, as those skilled in the art will recognize.

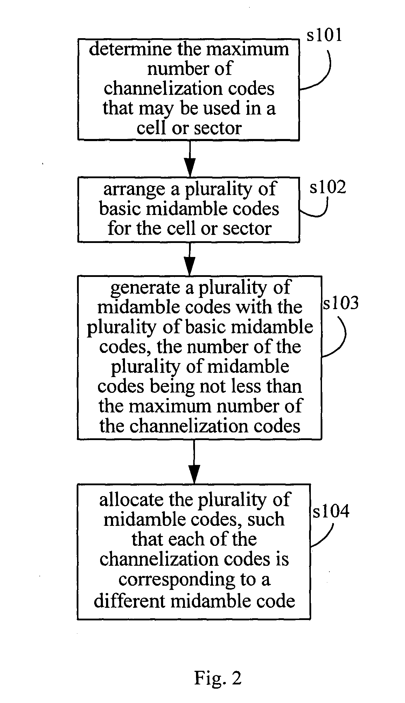

Figure 2 shows the principle of the present invention, including steps s101, s102, s103 and s104.

In step s101, the maximum number of channelization codes that may be used in a cell or sector, which is specific to the system, is determined.

In step s102, a plurality of basic midamble codes are arranged for the cell or sector by, but not limited to, configuring a Cell Parameter ID for multiple times, expanding the Cell Parameter ID, or using a new parameter capable of arranging basic midamble codes.

Further, different from the prior art, the arrangement of a plurality of basic midamble codes makes it possible to establish several different types of correspondences between the basic midamble codes and scramble codes as detailed below.

1. One-to-one correspondences are established between a plurality of scramble codes and a plurality of basic midamble codes. If a plurality of basic midamble codes is allowed to be used in a cell, each of the basic midamble codes is corresponding to its respective scramble code in the same manner as existing correspondence between the midamble code and scramble code. In this case, in such a cell, the number of the scramble codes is the same as that of the basic midamble codes.

2. If a plurality of basic midamble codes and only one scramble code are allowed to be used in a cell, instead of the one-to-one correspondences as described above, the plurality of basic midamble codes are corresponding to the same scramble code. In such a case, priorities can be set for each group of scramble codes on the basis of the existing correspondence between the midamble code and scramble code, and the basic midamble codes and scramble code can be respectively arranged by the network.

3. If only one scramble code is allowed to be used in a cell, one or more groups of basic midamble codes can be arranged in addition to an existing group of basic midamble codes. The only one scramble code can be corresponding to a basic midamble code in each group of codes. In the event that a plurality of basic midamble codes are allowed to be used in a cell, respective basic midamble codes in each group of the basic midamble codes corresponding to the scramble code used in the cell is allowed to be used.

In step s103, a plurality of midamble codes are generated by using the plurality of basic midamble codes, the number of the plurality of midamble codes being not less than that of the channelization codes. The present invention can, of course, be practiced with the number of the midamble codes being the same as that of the channelization codes. Different channel estimation windows can be generated by shifting a plurality of basic midamble codes in a similar manner to that used in the prior art.

In step s104, the plurality of midamble codes is arranged such that each of the channelization codes is corresponding to a different midamble code.

Embodiments of the present invention will be hereinafter described in detail with reference to the above three types of correspondences between the basic midamble codes and scramble codes.

In the case of the first type of correspondences, when the system configures a cell or sector, if needed, a plurality of basic midamble codes can be arranged for the cell or sector by configuring a Cell Parameter ID for multiple times, expanding the Cell Parameter ID, or using a new parameter capable of arranging basic midamble codes. The Cell Parameter ID represents, for example, a basic midamble code and its corresponding scramble code. A plurality of Cell Parameter IDs, each of which represents a group of basic midamble codes and scramble codes that may be used in the cell, can be arranged in CELL SETUP REQUEST, so as to complete the configuration of a base station. A plurality of Cell Parameter IDs can also be arranged in a cell broadcast message, such as SIB5, or in a switching related message, such as PHYSICAL CHANNEL RECONFIGURATION, so as to complete the configuration of a terminal. As such, a plurality of basic midamble codes and the same number of scramble codes with one-to-one correspondences therebetween can be arranged in a cell. Table 1 shows detailed correspondences in this case. There are four basic midamble codes (0, 1, 2 and 3) and four corresponding scramble codes (0, 1, 2 and 3) in each cell (for example, groupl).

**Table 1**

| Code group | Correspondences | | | |
|---|---|---|---|---|
| | SYNC-DL ID | SYNC-UL ID | Scramble code No. | Basic midamble code No. |
| Group 1 | 0 | 0...7 | 0 | 0 |
| | | | 1 | 1 |
| | | | 2 | 2 |
| | | | 3 | 3 |
| Group 2 | 1 | 8...15 | 4 | 4 |
| | | | 5 | 5 |
| | | | 6 | 6 |
| | | | 7 | 7 |
| ...... | | | | |
| ...... | | | | |
| Group 32 | 31 | 248...255 | 124 | 124 |
| | | | 125 | 125 |
| | | | 126 | 126 |
| | | | 127 | 127 |

The configuration of the Cell Parameter ID of the cell as 0 and 1 by the system makes it possible to configure the base station through CELL SETUP REQUEST and to notify the terminal through a broadcast message. As such, scramble codes No.0 and No.1 as well as midamble codes No. 0 and No.1 are used in the cell, and scramble codes No.0 and No.1 are respectively corresponding to midamble codes No.0 and No.1 in the same manner as existing correspondence.

In the case of the second type of correspondences, when the system configures a cell or sector, if needed, a plurality of basic midamble codes can be arranged for the base station and terminal in the same manner as that used in the case of the first type of correspondences, for example, by configuring a Cell Parameter ID for multiple times. In this case, the Cell Parameter ID represents a basic midamble code. The priorities of the scramble codes in each code group can be set according to a predefined criterion in which, for instance, the larger the sequence number of a scramble code in a code group, the lower (or higher) priority it is provided with. The one with the highest priority among scramble codes corresponding to a plurality of basic midamble codes is defined as the scramble code to be used in the cell. Table 2 shows detailed correspondences in this case. There are four basic midamble codes (0, 1, 2 and 3) and four corresponding scramble codes (0, 1, 2 and 3) in each cell (for example, groupl).

**Table 2**

| Code group | Correspondences | | | |
|---|---|---|---|---|
| | SYNC-DL ID | SYNC-UL ID | Scramble code No. | Basic midamble code No. |
| Group 1 | 0 | 0...7 | 0 | 0 |
| | | | 1 | 1 |
| | | | 2 | 2 |
| | | | 3 | 3 |
| Group 2 | 1 | 8...15 | 4 | 4 |
| | | | 5 | 5 |
| | | | 6 | 6 |
| | | | 7 | 7 |
| | | | | |
| | | | | |
| Group 32 | 31 | 248...255 | 124 | 124 |
| | | | 125 | 125 |
| | | | 126 | 126 |
| | | | 127 | 127 |

If the Cell Parameter ID of the cell is configured as 0 and 1 by the system, midamble codes No.0 and No.1 are used in the cell. Since the priority of scramble code No.0 has been set to be higher than that of scramble code No.1, scramble code No.0 is selected to be used. The basic midamble codes and scramble code used in the cell can also be configured by the network, for example, by adding two additional bits to the Cell Parameter ID or by further adding a two-bit parameter for identifying a scramble code sequence number. Such two bits represent the scramble code in the code group corresponding to a pluaritlity of basic midamble codes used in the cell. Similarly, more bits can be added to the Cell Parameter ID to realize the same effects. It is thus possible to arrange a plurality of basic midamble codes and one corresponding scramble code in a cell. If the Cell Parameter ID of the cell is still configured as 0 and 1, and the new introduced two-bit parameter for identifying the scramble code sequence number is configured as 1, then midamble codes No.0 and No.1 as well as scramble code No.1 are selected to be used in the cell.

In the case of the third type of correspondences, a plurality of basic midamble code groups can be further designed. For example, ifN basic midamble codes need to be used in a cell or sector, N-1 basic midamble code groups will be further designed. In case where M (1 ≦M≦N) basic midamble codes need to be arranged, the Cell Parameter ID of a cell, which represents a scramble code used in the cell and M corresponding basic midamble codes in the first M basic midamble code groups, can still be configured only once. Table 3 shows detailed correspondences in this case.

**Table 3**

| Code group | Correspondences | | | | |
|---|---|---|---|---|---|
| | SYNC-DL ID | SYNC-UL ID | Scramble code No. | Basic midamble code No. | |
| | | | | The first group of basic midamble codes | The second group of basic midamble codes |
| Group 1 | 0 | 0...7 | 0 | 1-0 | 2-0 |
| | | | 1 | 1-1 | 2-1 |
| | | | 2 | 1-2 | 2-2 |
| | | | 3 | 1-3 | 2-3 |
| Group 2 | 1 | 8...15 | 4 | 1-4 | 2-4 |
| | | | 5 | 1-5 | 2-5 |
| | | | 6 | 1-6 | 2-6 |
| | | | 7 | 1-7 | 2-7 |
| ...... | | | | | |
| ...... | | | | | |
| Group 32 | 31 | 248...255 | 124 | 1-124 | 2-124 |
| | | | 125 | 1-125 | 2-125 |
| | | | 126 | 1-126 | 2-126 |
| | | | 127 | 1-127 | 2-127 |

As shown in Table 3, two basic midamble codes need to be used in a cell or sector, and thus a further group of basic midamble codes are designed in the system. The first group of basic midamble codes, the second group of basic midamble codes, and the scramble codes are corresponding to each other, i.e., two basic midamble codes are corresponding to one scramble codes. If the Cell Parameter ID of the cell is still configured as 0 by the system, scramble code No.0, midamble code No.0 in the first group of basic midamble codes, and midamble code No.0 in the second group of basic midamble codes are selected to be used in the cell.

The arrangement of a plurality of basic midamble codes for one cell or sector can be implemented by either one of the three schemes as described above. Therefore, the use of a plurality of basic midamble codes in one cell or sector can be realized.

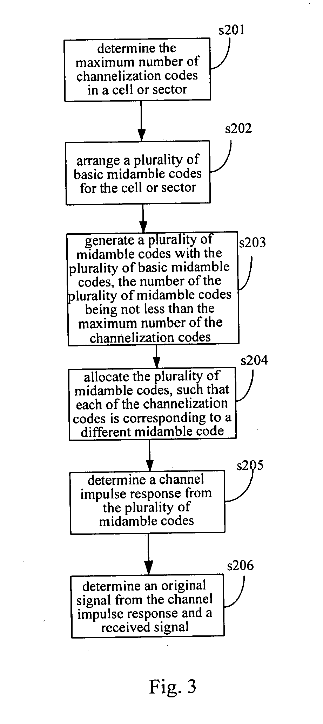

Further, with reference to Figure 3, the present invention provides a joint detection method on the basis of the above described allocation of multiple basic midamble codes, including the following steps of:

step s201: determining the maximum number of channelization codes in a cell or sector;

step s202: arranging a plurality of basic midamble codes for the cell or sector;

step s203: generating a plurality of midamble codes by using the plurality of basic midamble codes, the number of the plurality of midamble codes being not less than the maximum number of the channelization codes;

step s204: allocating the plurality of midamble codes, such that each of the channelization codes is corresponding to a different midamble code;

step s205: determining a channel impulse response from the plurality of midamble codes;

step s206: determining an original signal from the channel impulse response and a received signal.

In the foregoing specification, the invention has been described with reference to specific exemplary embodiments thereof. It is obvious to the skilled in the art that various changes and modifications may be made to the present invention without departing from the spirit and scope of the present invention, and it is intended that the present invention covers these changes and modifications provided that they fall within the scope of the present invention as defined by the appended claims and their equivalents.

## Claims

1. A method for allocating multiple midamble codes comprising the steps of:
A. determining the number of channelization codes in a cell or sector;
B. arranging a plurality of basic midamble codes for the cell or sector;
C. generating a plurality of midamble codes by using the plurality of basic midamble codes, the number of the plurality of midamble codes being not less than that of the channelization codes;
D. allocating the plurality of midamble codes, such that each of the channelization codes is corresponding to a different midamble code.

2. The method as defined in claim 1, wherein the step B further comprises the steps of:
B11: configuring a Cell Parameter ID for multiple times, each time the Cell Parameter ID being configured with a basic midamble code and a scramble code;
B12: forming basic midamble codes and scramble codes with one-to-one correspondences therebetween for the cell or sector, each of the basic midamble codes being corresponding to a different scramble code.

3. The method as defined in claim 1, wherein the step B further comprises the steps of:
B21: configuring a Cell Parameter ID for multiple times, each time the Cell Parameter ID being configured with a basic midamble code and a scramble code;
B22: forming basic midamble codes and scramble codes with one-to-one correspondences therebetween for the cell or sector, each of the basic midamble codes being corresponding to the same scramble code.

4. The method as defined in 1, wherein the step B further comprises the steps of:
B31: expanding a Cell Parameter ID;
B32: determining a basic midamble code and its corresponding scramble code on the basis of the expanded Cell Parameter ID;
B33: forming basic midamble codes and scramble codes with one-to-one correspondences therebetween for the cell or sector, each of the basic midamble codes being corresponding to a different scramble code.

5. The method as defined in claim 1, wherein the step B further comprises the steps of:
B41: expanding a Cell Parameter ID;
B42: determining a basic midamble code and its corresponding scramble code on the basis of the expanded Cell Parameter ID;
B43: forming basic midamble codes and scramble codes with one-to-one correspondences therebetween for the cell or sector, each of the basic midamble codes being corresponding to the same scramble code.

6. The method as defined in claim 3 or 5, wherein the same scramble code corresponding to the basic midamble codes is determined by the priorities of a group of scramble codes for the cell or sector, which are set according to a predefined criterion.

7. The method as defined in claim 1, wherein the step B further comprises the step of:
by adding at least one group of basic midamble codes, establishing one-to-one correspondences between each basic midamble code of the at least one group of basic midamble codes and each basic midamble code of the existing group of basic midamble codes, and establishing one-to-one correspondences between each basic midamble code of the at least one group of basic midamble codes and each scramble code of the existing group of scramble codes, such that there are a plurality of basic midamble codes in each cell or sector.

8. The method as defined in claim 1, wherein the schemes for allocating in the step D comprise specific allocation scheme, default allocation scheme and common allocation scheme.

9. The method as defined in claim 1, wherein the plurality of midamble codes in the step C are generated by cyclically shifting the plurality of basic midamble codes.

10. The method as defined in claim 1, wherein the number of the channelization codes is determined by the maximum number of shift windows.

11. The method as defined in claim 1, wherein the channelization codes have the same or a different spreading factor.

12. A joint detection method on the basis of the allocation of multiple basic midamble codes, comprising the steps of:
a. in initial system configuration, determining the number of channelization codes in a cell or sector; arranging a plurality of basic midamble codes for the cell or sector; generating a plurality of midamble codes by using the plurality of basic midamble codes, the number of the plurality of midamble codes being not less than that of the channelization codes; allocating the plurality of midamble codes, such that each of the channelization codes is corresponding to a different midamble code;
b. determining a channel impulse response from the plurality of midamble codes;
c. determining an original signal from the channel impulse response and a received signal.
